# EUROPEAN PATENT SPECIFICATION

(11) **EP 0 568 340 B1**
(45) Date of publication and mention of the grant of the patent: **19.06.1996**
(21) Application number: 93303314.4
(22) Date of filing: 28.04.1993
(51) Int. Cl.: F16F 13/00

(54) **Fluid-damped resilient mounts and assembly thereof**
Elastische, flüssigkeitgedämpfte Lager und die Montage solcher Lager
Supports élastiques à amortissement fluidique et montage de tels supports

(30) Priority: 28.04.1992 US 874930
(43) Date of publication of application: 03.11.1993
(73) Proprietor: GENCORP INC., Fairlawn, Ohio 44333-3300 (US)
(72) Inventor: Hein, Richard D., Wabash, Indiana 46992 (US); Kelly, Walter J., Marion, Indiana 46952 (US)
(74) Representative: Stoner, Gerard Patrick

(56) References cited:
- DE-A- 1 948 352
- FR-A- 2 573 156
- US-A- 4 593 891

## Description

This invention relates to fluid-damped resilient mounting devices and to their manufacture and assembly. In one aspect the invention relates to a method of component assembly, sealing, filling and testing of such a device, which can be prior to and remote from final assembly with elastomeric and housing components. In particular the invention is concerned with fluid-damped resilient mounts suitable for automotive applications, such as resiliently supporting and isolating an automotive power train and/or suspension.

Known fluid-damped elastomeric mounts are generally of three types. A first type is a basic bushing having opposed fluid reservoirs which communicate through inertial track capillaries, and is normally used in automotive suspension components requiring a single axis damping. A second type is a modified bushing incorporating "dash pot" type viscous damping that forces fluid past a baffle when axial movement occurs, and is typically used in automotive shock/strut components. A third type is a fluid-damped mount having dual fluid chambers communicating through an inertial track and decoupler system together with a fluid return mechanism.

The above-described known fluid-damped elastomeric mounts typically have a number of inherent problems. First, the design of the mounts is relatively complicated to accommodate anticipated forces and displacements while also providing for a permanent hydraulic pressure seal to retain fluid in the device long-term. Second, introduction of the fluid into the fluid cavity, and into accessory parts such as the inertial track and/or decoupler system, is difficult. Two methods are generally currently employed. In one method, the components of the elastomeric mount are assembled and sealed while submerged in a fluid bath. In another method, after assembly and sealing of the elastomeric mounting components, the fluid cavity is evacuated and filled with the selected fluid. After assembly, filling and sealing of the elastomeric mount, the mount must be carefully checked for leaks and dynamic characteristics.

Such methods of forming the mounts can be demanding of labour and/or equipment as well as expensive. Moreover, such methods can be damaging in applications where electro-rheological fluid damping is called for, using fluids which change density/viscosity in response to the application of an electrical charge and thereby change the damping characteristics of a mount. Such systems require precise placement of wires, contacts, connectors, sensors, etc., which are sensitive to damage, displacement, or contamination. Assembling and sealing elastomeric mounting components while submerged in a fluid bath, or assembling and sealing the elastomeric mount and separately filling the mount, subjects these sensitive components to hostile environments and contaminants such as liquid, heat and heavy pressures and also presents difficulties in the context of an assembly line environment.

In the prior art, we have noted the following disclosures.

US-A-4,593,891 relates to a vibration-absorbing engine mounting device with fluid damping which comprises an upper mounting member, a lower mounting member, a rubber wall body interposed between them with its upper and lower portions air-tightly sealed thereto, a block damper transversely provided in the rubber wall body, and a capsule encased in a space enclosed by said four members, thus defining a closed chamber enclosed by all five said members. The capsule comprises an exterior rigid case, an interior sealed bag encapsulated in the rigid case defining a sacciform chamber, and an orifice member entering these. The closed chamber and the sacciform chamber are filled with fluid and in communication with one another via the orifice member.

US-A-4,613,118 relates to a fluid-sealed engine mounting comprising a connector for being connected to an engine, a base for being mounted on a vehicle frame, and an elastic member joining the connector to the base, the connector, the base, and the elastic member jointly defining a fluid chamber in which a fluid is sealed during assembly of the mount. The fluid-sealed engine mounting has a variable-volume member mounted on one of the connector and the base in the fluid chamber and containing at least a gas capable of negative atmospheric or positive pressure sealed therein, the first variable-volume member being expandable and contractible in a direction in which vibrations are transmitted in the fluid chamber.

The prior art according to the preamble of claims 1 and 14, respectively, is known from FR-A-2573156 showing a fluid-damped resilient mounting device in which a damping fluid occupies a damping chamber defined adjacent a resiliently deformable member of the mounting device, to dampen resilient deformations thereof, the diaphragm wall conforming against the resiliently deformable member. The aim is to permit air to be blown in between the diaphragm and deformable member. The mode of assembly is not described.

The aim of the invention is to provide novel fluid-damped resilient mounting devices, and novel processes of manufacturing and assembling fluid-damped resilient mounting devices. The invention is defined by claims 1 and 14, respectively.

Embodiments of the invention are set out in the claims, 2 to 13 and 15 to 17.

The damping fluid occupies a chamber defined adjacent at least one resiliently deformable member, and more usually between two opposed resilient deformable members. The diaphragm wall is conformed against the resiliently deformable member, or against one or both such members when there are two.

Typically the deformable member(s) is/are fixed in a rigid outer housing e.g. a tubular housing, so as to operate with a defined primary direction of resilient deformation.

Components which are to be mounted resiliently together by way of the mounting device may be secured to attachment means, either on respective said deformable members, or on a deformable member and a rigid housing as mentioned.

Preferably a fluid-flow regulation component, typically a divider plate having one or more fluid-flow control openings or channels, is comprised in the fluid-tight module. A dynamic flow adjuster, e.g. an obturator element movable to govern the extent of such an opening or channel, or means for influencing the viscosity of the sealed-in fluid, or relatively slidable viscosity-damping elements, may also be comprised in the module.

The module may have a locating portion for aligning the module relative to the other mounting device components for assembly. It may have a securing portion to hold it in position in the assembled mounting device. The same part or parts may serve both the aligning and securing functions. Typically this might be a peripheral or axial projection. For example, a peripheral flange of the module may conveniently be trapped between first and second components of the mounting device. Such location/securing engagements may also locate/secure any rigid fluid-flow regulation component comprised in the module.

The invention provides a sealed fluid-containing module, which may incorporate optional and preferred features as mentioned above and described below within the scope of the invention defined by claims 1 and 14, respectively.

Embodiments of the invention are now described by way of example, with reference to the accompanying drawings.

### BRIEF DESCRIPTION OF DRAWINGS

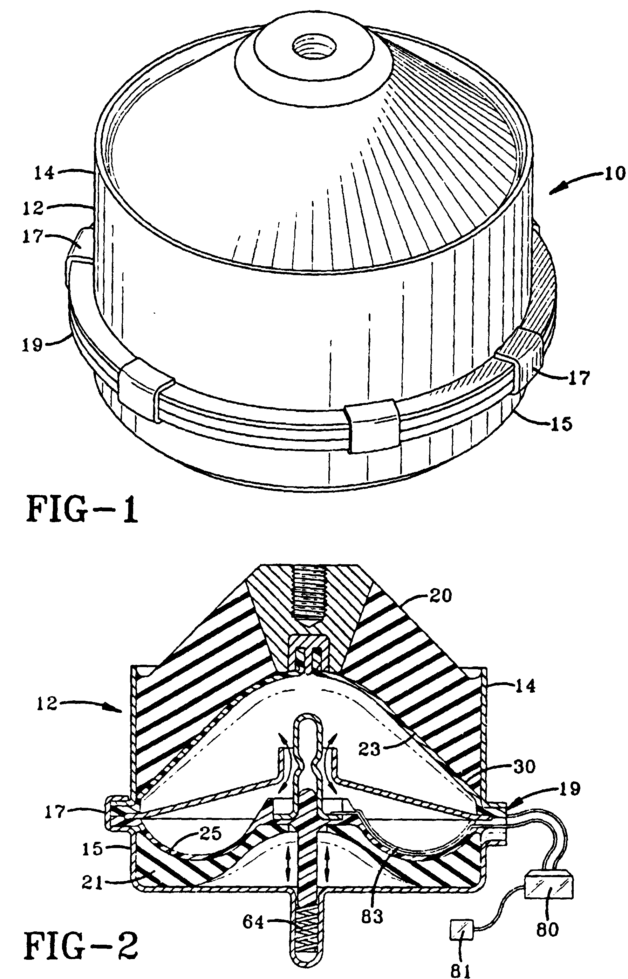

Fig. 1 is a perspective view of an resilient mount, being a first embodiment of the invention;
Fig. 2 is a diametrical axial cross-section of the first embodiment;
Fig. 3 is an axially-exploded diametrical cross-section of the first embodiment;
Fig. 4 is a diametrical axial cross-section of a fluid composite member or fluid module of the resilient mount, being itself an embodiment of the invention, and
Fig. 5 is a diametrical axial cross-section of a different resilient mount, being a third embodiment of the invention.

### DETAILED DESCRIPTION

A first fluid-damped mount embodying the invention is shown generally at 10 and comprises a housing or canister 12 which has an upper cylindrical member 14 and a lower cup member 15 joined together by means of clips 17 which form mechanical joints at flange 19, without requiring hydraulic seal capability. Further, the mount includes an upper compliance member 20 and a lower compliance member 21 having opposing respective internal surfaces 23,25. Both of the compliance members 20 and 21 are generally concave or hollowed so that the inner surfaces 23,25 define an inner chamber to receive and support a module 30 for containing damping fluid members are of elastomer e.g. rubber.

The upper compliance member 20 meets multi-axis and dynamic requirements and has a size and geometry to meet the requirements of the particular vehicle with which it is used. It includes a central insert 27, with a threaded bore 29 on the external side for mounting a component to be supported, e.g. by way of a threaded stud or the like. The insert further has an inwardly-opening recess 28 which receives a fill cap 32 of the module 30. This fill cap could also be located at the equator of the module or at another convenient place. The insert 27 is made of a suitably non-deformable material, such as metal.

The module 30 is a self-contained fluid-tight sealed module which comprises a top diaphragm member 34 with a peripheral sealing flange 35 and a seal port 36 (closable by means of the fill cap 32 or by other suitable means), and a bottom diaphragm 38 having a peripheral sealing flange 39.

The module 30 further includes a divider plate 40 having a central tube hole 42: an inlet and outlet port connected by generally cylindrical longitudinally-extending tube walls 43 which, together with a stop cock member 52, form a fluid-flow regulating orifice or channel.

The top diaphragm member defines a top fluid chamber of the module, while the bottom diaphragm member 38 includes a depression 47 with a recess 49 in a central raised portion, and a nipple or boss 50 which projects into said fluid chamber.

The nipple 50 holds the stop cock member 52, which has flanges 53 received in the recess 49. The stop cock 52 has a waist section 55 of reduced diameter, to regulate the flow of the fluid through the orifice 42 of the divider plate 40, and extends through the orifice into or towards the upper fluid chamber.

The lower diaphragm member further includes an elongate external boss 60 which projects axially down through an opening in the lower compliance member 21. The boss engages a compression spring 64 which rests in a recess in the lower housing member 15. This provides additional fluid-returning force.

The circumferential flange 19 of the device incorporates the supporting flanges 66,67 of the top and bottom housing members respectively and the sealing flange portions 35,39 of the top and bottom diaphragms. The divider plate 40 has a peripheral portion 70 which is captured between the flanges 35,39 of the diaphragms. The peripheral portion 70 of the divider plate does not extend the full radial extent of the sealing flanges, so a seal is achieved around it between the top and bottom diaphragm members e.g. by adhesive or heat sealing. However, it extends sufficiently far into the sealed area to separate effectively the top and bottom chambers of the fluid-containing module.

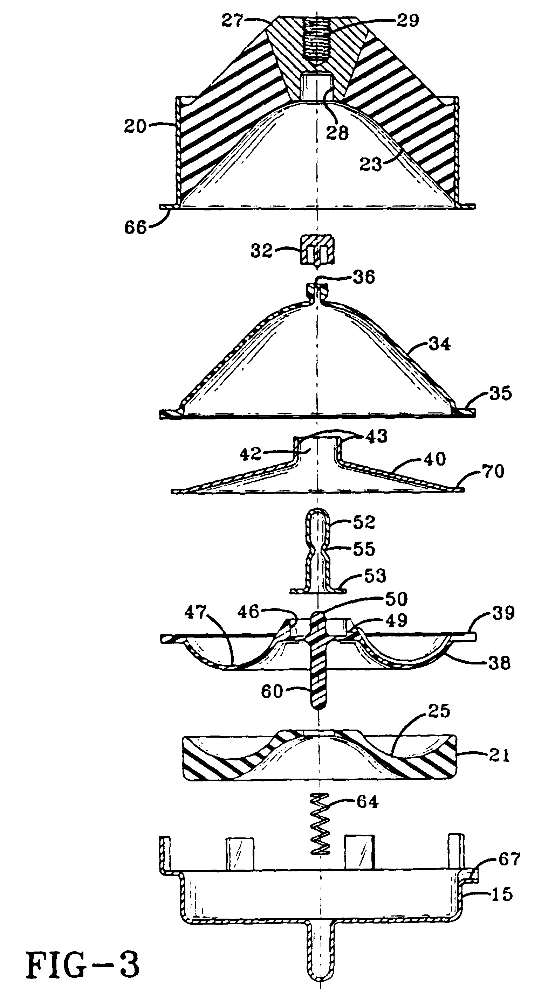

As can be seen in Fig. 3, the clips 17 may comprise laterally extending projections from the bottom supporting flange 67 of the bottom housing member which are simply bent into position to trap the top supporting flange 66 of the upper housing. The construction has the advantage that neither the top and bottom compliance members, nor the top and bottom housing members, need form an air-tight or fluid-tight seal. Likewise, the design of the top and bottom compliance members may be dedicated to damping vibrations and oscillations, without being restricted by needing to achieve a seal between the members. The module 30 is fluid-tight regardless of the distribution of forces on the members. Likewise an advantage is provided insofar as the module 30 for containing damping fluid may be assembled and filled in an environment different from that for the general assembly of the mount. With the role of fluid retainer being removed from the top and bottom compliance members, it is necessary only that they support the fluid-containing module 30 and provide resilient characteristics as needed for the specific vehicle.

The present embodiment is designed for use with electrorheological fluid and therefore has a sensor component 80, operatively connected to a microprocessor 81, and including a plate member 83 which forms a circuit with a lead connected to the divider plate 40.

The centre pin electrode (stop cock 52) and the divider plate electrode are.positioned to form a ring orifice within the central orifice 42. When the lower compliance member and the lower diaphragm move downward, the pin electrode will move downward an equal or greater amount. The resulting relative motion between the centre pin and the divider plate electrode which simulates a "sliding plate" mechanism in the radial fluid. The waist section 55 of the stop cock 52 is an additional tuning mechanism to regulate fluid flow.

The fluid chamber is designed so that as the top and bottom chambers are filled, air will be forced out through the fill port 36. An extension 46 in the lower diaphragm inhibits deflection of the stop cock member to prevent direct contact with the divider plate 40.

Under normal conditions the mount may act as a standard elastically-resilient mount. However, when certain specific or undesirable vibration characteristics are sensed by the microprocessor, a voltage is applied to the electrode to increase the fluid viscosity and accordingly the damping properties of the mount.

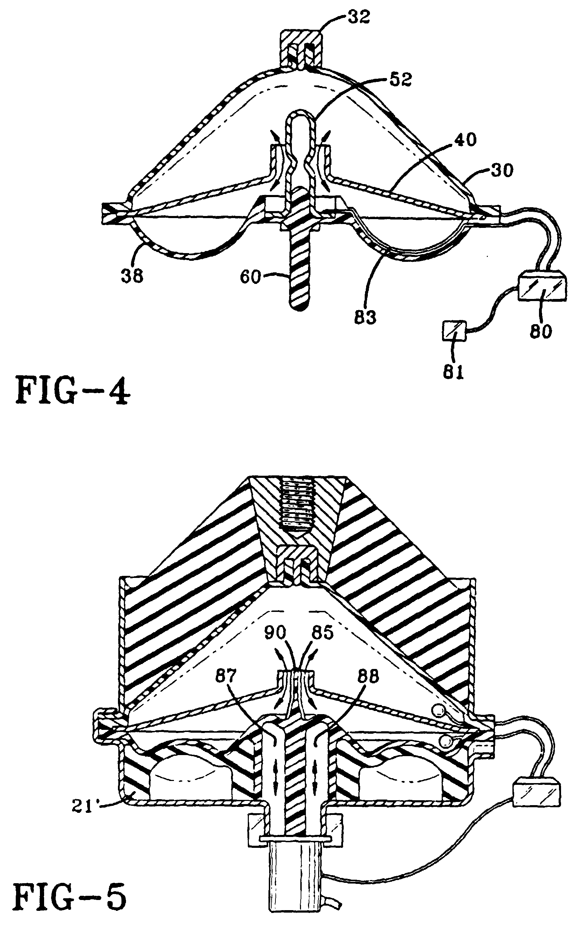

An alternative embodiment is shown in Fig. 5 in which electrorheological fluid is not used. In this embodiment, a ring orifice is formed by co-operation of a divider plate opening with a needle valve 85 operable by a servo hydraulic actuator using a microprocessor similar to the one shown for the first embodiment. In this embodiment, external hydraulic drive chambers 87,88 can be driven upward or downward so as to change the relative location of the stop cock or obturating portion 90 of the needle valve 85. The hydraulic chambers 87,88 are defined by the bottom side of the lower diaphragm and a longitudinal opening in the bottom compliance member 21'.

The upper and lower diaphragms of the fluid containing module are typically of a heat- or chemical-sealable polymer which is selected to have the required tensile, flex, elongation and fluid resistance properties. Specific examples include polyethylene and polypropylene. The upper and lower compliance members are of elastomer having the desired physical characteristics, and may be premoulded in halves for ease of assembly and to allow for greater internal detail. The mount may be assembled by first assembling the module with the internal divider plate in place. As has been previously discussed, it is advantageous to provide a fluid-tight seal such as a heat seal at the sealing flanges of the upper and lower diaphragm. The module may subsequently be filled with fluid such as by a fill and evacuation technique using the fill port 36. Once filled, the fluid package may be tested for fluid or air leaks. Further, this may be accomplished before assembly into the mount.

The fluid-containing module may be assembled between the compliance members off-site. The present design also accommodates the assembly of the mount on site, insofar as the assembler does not need to bother with the fluid or with filling the mount. Further, the present design contributes to eliminating or at least reducing the two main causes of fluid malfunctions, leaks and air entrapment.

## Claims

1. A fluid-damped resilient mounting device in which damping fluid occupies a damping chamber defined adjacent at least one resiliently deformable member (20,21) of the device, to dampen resilient deformations thereof, the damping chamber having a fluid-tight diaphragm wall (34,38) conforming against the resiliently deformable member (20,21),
characterised in that
the diaphragm wall (34,38) is a wall of a fluid-tight module (30) in which the damping fluid is contained, and which has been presealed before assembly against the resiliently deformable member (20,21).

2. A mounting device according to claim 1 in which there are two opposed resiliently deformable members (20,21) and the damping chamber is defined between them.

3. A mounting device according to claim 2 in which the diaphragm wall (34,38) of the fluid-tight module (30) conforms against both of the resiliently deformable members (20,21).

4. A mounting device according to any one of the preceding claims in which the at least one resiliently deformable member (20,21) is/are fixed in a rigid outer housing (15,20).

5. A mounting device according to claim 4 in which the rigid outer housing (15,20) is tubular, defining an axial deformation direction of the device.

6. A mounting device according to any one of the preceding claims in which the fluid-tight module (30) comprises a fluid-flow regulation component (40,42) having one or more fluid-flow control openings or channels to regulate flow of the damping fluid therein.

7. A mounting device according to claim 6 in which the fluid-flow regulation component comprises a divider plate (40) dividing the damping chamber into first and second fluid chambers, the first and second fluid chambers being connected through a restricted orifice (42) of the divider plate (40) constituting a fluid-flow control opening.

8. A mounting device according to claim 6 or claim 7 in which the fluid-tight module (30) comprises an obturator (52) which is movable to vary the extent of the one or more fluid-flow control openings or channels.

9. A mounting device according to claim 8 comprising external hydraulic drive chambers (87,88) for controllably driving a said resiliently deformable member (38), carrying the obturator (52), to adjust the extent of the one or more fluid-flow control openings or channels controllably.

10. A mounting device according to any one of claims 6 to 9 in which the damping fluid is an electrorheological fluid and the mounting device comprises means for applying a voltage to adjust the viscosity of the electrorheological fluid.

11. A mounting device according to any one of the preceding claims in which the fluid-tight module (30) comprises a top diaphragm member (34) and a bottom diaphragm member (38), the diaphragm members (34,38) having respective peripheral sealing flanges (35,39) around which they are sealed to one another.

12. A mounting device according to any one of the preceding claims in which the fluid-tight module (30) has a locating projection (32,36; 35,39) engaged by an adjacent part (28;66,67) of the mounting device to hold the fluid-tight module (30) in position in the mounting device.

13. A mounting device according to claim 12 as dependent on claim 4, in which a said locating projection is clamped between first and second components (15,20) of the rigid outer housing of the mounting device.

14. A method of assembling a fluid-damped resilient mounting device in which damping fluid occupies a damping chamber defined adjacent at least one resiliently deformable member (20,21) of the mounting device to damp resilient deformations thereof, the damping chamber having a fluid-tight diaphragm wall (34,38) conforming against the resiliently deformable member (20,21), characterised by pre-sealing the damping fluid into a fluid-tight module (30) having the deformable diaphragm wall (34,38),and assembling the mounting device to conform the diaphragm wall (34,38) of the pre-sealed fluid-tight module against the resiliently deformable member (20,21).

15. A method according to claim 14 in which the mounting device has two opposed resiliently deformable members (20,21), and the pre-sealed fluid-tight module is positioned between them in assembling the mounting device.

16. A method according to claim 14 or claim 15 in which the pre-sealed fluid-tight module (30) is tested for fluid leaks and/or air entrapment before being assembled into the mounting device.

17. A method according to any one of claims 14 to 16 in which the mounting device is in accordance with any one of claims 3 to 13.

## Patentansprüche

1. Elastische, fluidgedämpfte Einbau- bzw. Montagevorrichtung bzw. Lagerung, worin Dämpfungsfluid eine Dämpfungskammer ausfüllt bzw. einnimmt, die angrenzend zu zumindest einem elastisch verformbaren Element (20, 21) der Vorrichtung definiert ist, um dessen elastische Verformungen zu dämpfen, wobei die Dämpfungskammer eine fluiddichte Membran- bzw. Diaphragmawand (34, 38) besitzt, die sich gegen bzw. an das elastisch verformbare Element (20, 21) anpaßt,
dadurch gekennzeichnet, daß
die Membran- bzw. Diaphragmawand (34, 38) eine Wand eines fluiddichten Moduls (30) ist, in dem Dämpfungsfluid enthalten ist, welche Wand vor dem Zusammenbau gegen das elastisch verformbare Element (20, 21) vorabgedichtet wurde.

2. Einbau- bzw. Montagevorrichtung bzw. Lagerung nach Anspruch 1, worin es zwei gegenüberliegende, elastisch verformbare Elemente (20, 21) gibt und die Dämpfungskammer zwischen ihnen definiert ist.

3. Einbau- bzw. Montagevorrichtung bzw. Lagerung nach Anspruch 2, worin sich die Membranwand (34, 38) des fluiddichten Moduls (30) gegen beide der elastisch verformbaren Elemente (20, 21) anpaßt.

4. Einbau- bzw. Montagevorrichtung bzw. Lagerung nach einem der vorhergehenden Ansprüche, worin das zumindest eine elastisch verformbare Element (20, 21) an/in einem starren Außengehäuse (15, 20) fixiert ist.

5. Einbau- bzw. Montagevorrichtung bzw. Lagerung nach Anspruch 4, worin das starre Außengehäuse (15, 20) rohrförmig ist und eine axiale Verformungsrichtung der Vorrichtung definiert.

6. Einbau- bzw. Montagevorrichtung bzw. Lagerung nach einem der vorhergehenden Ansprüche, worin das fluiddichte Modul (30) einen Fluidstrom-Regulationsbestandteil (40, 42) mit einem oder mehreren Fluidstrom-Steueröffnungen oder -kanäle umfaßt, um den Strom des Dämpfungsfluids darin zu regulieren.

7. Einbau- bzw. Montagevorrichtung bzw. Lagerung nach Anspruch 6, worin der Fluidfluß-Regulationsbestandteil eine Teilerplatte (40) umfaßt, die die Dämpfungskammer in eine erste und zweite Fluidkammer unterteilt, wobei die erste und die zweite Fluidkammer durch eine eingeschränkte Öffnung (42) der Teilerplatte (40) verbunden ist, die eine Fluidfluß-Regulierungsöffnung darstellt.

8. Einbau- bzw. Montagevorrichtung bzw. Lagerung nach Anspruch 6 oder 7, worin das fluiddichte Modul (30) ein Absperrorgan (52) umfaßt, das beweglich ist, um das Ausmaß des oder der Fluidfluß-Regulierungsöffnungen oder -kanäle zu variieren.

9. Einbau- bzw. Montagevorrichtung bzw. Lagerung nach Anspruch 8, umfassend äußere hydraulische Antriebskammern (87, 88) zum steuerbaren Antrieb des elastisch verformbaren Elements (38), das das Absperrorgan (52) trägt, um das Ausmaß des oder der Fluidfluß-Regulierungsöffnungen oder -kanäle steuerbar einzustellen.

10. Einbau- bzw. Montagevorrichtung bzw. Lagerung nach einem der Ansprüche 6 bis 9, worin das Dämpfungsfluid ein elektro-rheologisches Fluid ist und die Einbau- bzw. Montagevorrichtung bzw. Lagerung Mittel zum Anlegen einer Spannung umfaßt, um die Viskosität des elektrorheologischen Fluids einzustellen.

11. Einbau- bzw. Montagevorrichtung bzw. Lagerung nach einem der vorhergehenden Ansprüche, worin das fluiddichte Modul (30) ein oberes Membranelement (34) und ein unteres Membranelement (38) umfaßt, wobei die Membranelemente (34, 38) jeweilige periphere Dichtungsflansche (35, 39) besitzen, um die sie miteinander abgedichtet sind.

12. Einbau- bzw. Montagevorrichtung bzw. Lagerung nach einem der vorhergehenden Ansprüche, worin das fluiddichte Modul (30) einen Positionierungsfortsatz (32, 36; 35, 39) besitzt, in den ein angrenzender Teil (28; 66, 67) der Einbau- bzw. Montagevorrichtung bzw. Lagerung eingreift, um das fluiddichte Modul (30) in der Einbau- bzw. Montagevorrichtung bzw. Lagerung festzuhalten.

13. Einbau- bzw. Montagevorrichtung bzw. Lagerung nach Anspruch 12, abhängig von Anspruch 4, worin der Positionierungsfortsatz zwischen einer ersten und zweiten Komponente (15, 20) des starren Außengehäuses der Einbau- bzw. Montagevorrichtung bzw. Lagerung eingeklemmt ist.

14. Verfahren zum Zusammenbauen einer fluidgedämpften elastischen Einbau- bzw. Montagevorrichtung bzw. Lagerung, worin das Dämpfungsfluid eine Dämpfungskammer ausfüllt bzw. einnimmt, die angrenzend zu zumindest einem elastisch verformbaren Element (20, 21) der Einbau- bzw. Montagevorrichtung bzw. Lagerung definiert ist, um dessen elastische Verformungen zu dämpfen, wobei die Dämpfungskammer eine fluiddichte Membran- bzw. Diaphragmawand (34, 38) besitzt, die sich gegen bzw. an das elastisch verformbare Element (20, 21) anpaßt, gekennzeichnet durch das Vorabdichten des Dämpfungsfluids in ein fluiddichtes Modul (30), das die verformbare Membran- bzw. Diaphragmawand (34, 38) aufweist, und das Zusammenbauen der Einbau- bzw. Montagevorrichtung bzw. Lagerung, um die Membran- bzw. Diaphragmawand (34, 38) des vorabgedichteten fluiddichten Moduls gegen bzw. an das elastisch verformbare Element (20, 21) anzupassen.

15. Verfahren nach Anspruch 14, worin die Einbau- bzw. Montagevorrichtung bzw. Lagerung zwei gegenüberliegende elastisch verformbare Elemente (20, 21) besitzt und das vorabgedichtete fluiddichte Modul beim Zusammenbauen der Einbau- bzw. Montagevorrichtung bzw. Lagerung zwischen ihnen positioniert ist.

16. Verfahren nach Anspruch 14 oder 15, worin das vorabgedichtete fluiddichte Modul (30) vor dem Zusammenbau zur Einbau- bzw. Montagevorrichtung bzw. Lagerung hinsichtlich Fluid lecks und/oder Lufteinschlüssen überprüft wird.

17. Verfahren nach einem der Ansprüche 14 bis 16, worin die Einbau- bzw. Montagevorrichtung bzw. Lagerung einem der Ansprüche 3 bis 13 entspricht.

## Revendications

1. Dispositif de montage élastique à amortissement fluidique, dans lequel le fluide d'amortissement occupe une chambre d'amortissement définie adjacente à au moins un élément élastiquement déformable (20,21) du dispositif, afin d'amortir des déformations élastiques do celui-ci, la chambre d'amortissement comportant une paroi de diaphragme étanche au fluide (34,38) s'adaptant à l'élément élastiquement déformable (20,21), caractérisé en ce que la paroi de diaphragme (34,38) est une paroi d'un module étanche au fluide (30), dans lequel le fluide d'amortissement est contenu et qui a été rendue étanche préalablement avant l'assemblage contre l'élément élastiquement déformable (20,21).

2. Dispositif de montage selon la revendication 1, dans lequel sont prévus deux éléments élastiquement déformables opposée (20,21) et la chambre d'amortissement est définie entre ceux-ci.

3. Dispositif de montage selon la revendication 2, dans lequel la paroi de diaphragme (34,38) du module étanche au fluide (30) s'adapte aux deux éléments élastiquement déformables (20,21).

4. Dispositif de montage selon l'une des revendications précédentes, dans lequel l'élément élastiquement déformable (20,21) dont au moins un est prévu est fixé dans un boîtier extérieur rigide (15,20).

5. Dispositif de montage selon la revendication 4, dans lequel le boîtier extérieur rigide (15,20) est tubulaire, définissant une direction de déformation axiale du dispositif.

6. Dispositif de montage selon l'une des revendications précédentes, dans lequel le module étanche au fluide (30) comprend un composant de régulation d'écoulement de fluide (40,42) comportant une ou plusieurs ouvertures ou canaux de commande de l'écoulement du fluide pour régler l'écoulement du fluide d'amortissement dans celui-ci.

7. Dispositif de montage selon la revondication 6, dans lequel le composant de régulation de l'écoulement de fluide comprend une plaque de division (40) divisant la chambre d'amortissement en des première et deuxième chambres de fluide, les première et deuxième chambres de fluide étant reliées par un orifice restreint (42) de la plaque de division (40) constituant une ouverture de commande de l'écoulement du fluide.

8. Dispositif de montage selon la revendication 6 ou la revendication 7, dans lequel le module étanche au fluide (30) comprend un obturateur (52) qui est déplaçable pour faire varier l'étendue d'une ou de plusieurs ouvertures ou canaux de commande de l'écoulement du fluide.

9. Dispositif de montage selon la revendication 8, comprenant des chambres d'entraînement hydraulique externes (87,88) pour entraîner de manière contrôlée ledit élément élastiquement déformable (38), pour porter l'obturateur (52), pour régler de manière commandée l'étendue d'une ou de plusieurs ouvertures ou canaux de commande de l'écoulement du fluide.

10. Dispositif de montage selon l'une des revendications 6 à 9, dans lequel le fluide d'amortissement est un fluide électro-rhéologique, et le dispositif de montage comprend un moyen pour appliquer une tension afin de régler la viscosité du fluide électro-rhéologique.

11. Dispositif de montage selon l'une des revendications précédentes, dans lequel le module étanche au fluide (30) comprend un élément de diaphragme supérieur (34) et un élément de diaphragme inférieur (38), les éléments de diaphragme (34,38) ayant des rebords d'étanchéité périphériques respectifs (35,39) autour desquels ils sont soudés l'un à l'autre.

12. Dispositif de montage selon l'une des revendications précédentes, dans lequel le module étanche au fluide (30) a une saillie de localisation (32,36;35,39) en prise avec une pièce adjacente (28;66,67) du dispositif de montage pour maintenir le module étanche au fluide (30) en position dans le dispositif de montage.

13. Dispositif de montage selon la revendication 12 dépendant de la revendication 4, dans lequel ladite saillie de localisation est serrée entre les premier et deuxième composants (15,20) du boîtier extérieur rigide du dispositif de montage.

14. Procédé pour assembler un dispositif de montage élastique à amortissement fluidique, dans lequel le fluide d'amortissement occupe une chambre d'amortissement définie adjacente à au moins un élément élastiquement déformable (20,21) du dispositif de montage pour amortir les déformations élastiques de celui-ci, la chambre d'amortissement comportant une paroi de diaphragme étanche au fluide (34,38) s'adaptant à l'élément élastiquement déformable (20,21), caractérisé par les étapes consistant à sceller préalablement le fluide d'amortissement dans un module étanche au fluide (30) comportant la paroi de diaphragme déformable (34,38) et à assembler le dispositif de montage pour adopter la paroi de diaphragme (34,38) du module pré-scellé, étanche au fluide à l'éLément élastiquement déformable (20,21).

15. Procédé selon la revendication 14, dans lequel le dispositif de montage comporte deux éléments élastiquement déformables opposés (20,21), et le module pré-scellé étanche au fluide est positionné entre ceux-ci lors de l'assemblage du dispositif de montage.

16. Procédé selon la revendication 14 ou la revendication 15, dans lequel le module pré-scellé étanche au fluide (30) est testé en vue de fuites de fluide et/ou d'inclusions d'air avant qu'il soit installé dans le dispositif de montage.

17. Procédé selon l'une des revendications 14 à 16, dans lequel le dispositif de montage est réalisé conformément à l'une des revendications 3 à 13.
